## Europäisches Patentamt
## European Patent Office
## Office européen des brevets

(11) Veröffentlichungsnummer: **0 582 040 A1**

# EUROPÄISCHE PATENTANMELDUNG

(21) Anmeldenummer: **93106312.7**

(51) Int. Cl.5: **H04L 5/22**

(22) Anmeldetag: **19.04.93**

| | |
|---|---|
| Ein Antrag gemäss Regel 88 EPÜ auf Hinzufügung eines fehlenden Teiles der Beschreibung liegt vor. Über diesen Antrag wird im Laufe des Verfahrens von der Prüfungsabteilung eine Entscheidung getroffen werden (Richtlinien für die Prüfung im EPA, A-V, 2.2). | **Co.**<br>**Postfach 110**<br>**D-73726 Esslingen(DE)** |
| | (72) Erfinder: **Gorzellik, Dietrich, Dipl.-Ing.**<br>**Ulrich-von-Ensingen Strasse 5**<br>**W-7440 Nürtingen(DE)**<br>Erfinder: **Reuschen, Rolf, Dipl.-Ing.**<br>**Schorndorfstrasse 73**<br>**W-7300 Esslingen(DE)** |
| (30) Priorität: **02.07.92 DE 4221718** | |
| (43) Veröffentlichungstag der Anmeldung:<br>**09.02.94 Patentblatt 94/06** | |
| (84) Benannte Vertragsstaaten:<br>**AT BE CH DE DK ES FR GB IT LI NL SE** | (74) Vertreter: **Geyer, Ulrich F., Dr., Dipl.-Phys.**<br>**Wagner & Geyer**<br>**Patentanwälte**<br>**Gewürzmühlstrasse 5**<br>**D-80538 München (DE)** |
| (71) Anmelder: **RICHARD HIRSCHMANN GmbH &** | |

(54) **Verfahren und Schaltungsanordnung zur jitterfreien seriellen Binärdaten Übertragung asynchroner.**

(57) Bei einem Verfahren zum seriellen Übertragen von binär codierten Daten über eine Übertragungsstrecke (11) werden zur Vermeidung von Jittereffekten Änderungen der zu übertragenden Daten ermittelt und die Daten bei Feststellen einer Änderung übertragen. Vorzugsweise wird zusätzlich der Zeitraum zwischen zwei Datenänderungen ermittelt und die zuvor übertragenen Daten wenigstens ein weiteres Mal übertragen, wenn der ermittelte Zeitraum größer oder gleich dem für die Übertragung der Daten erforderlichen Zeitraum ist. Durch die wiederholte Übertragung der Daten ist eine kontinuierliche Datenrate auf der Übertragungsstrecke gewährleistet, der korrekte Datenzustand kann nach einer Übertragungsstörung wieder hergestellt werden, und die Funktionsüberwachung der Übertragungsstrecke ist möglich. Schaltungsanordnungen zur Durchführung des Verfahrens sind angegeben.

Fig.1

Die Erfindung betrifft ein Verfahren zum seriellen Übertragen von binär codierten Daten über eine Übertragungsstrecke, wobei die Daten am Eingang der Übertragungsstrecke einen Multiplex-Vorgang mit einer Parallel-Seriell-Wandlung und am Ausgang der Übertragungsstrecke einem Demultiplex-Vorgang mit einer Seriell-Parallel-Wandlung unterzogen werden. Die Erfindung betrifft weiterhin eine Schaltungsanordnung zum seriellen Übertragen von binär codierten Daten über eine Übertragungsstrecke, die am Eingang einen Multiplexer mit einem parallel-Seriell-Wandler und am Ausgang einen Demultiplexer mit einem Seriell-Parallel-Wandler aufweist.

Verfahren- bzw. Schaltungsanordnungen dieser Art sind aus Tietze-Schenk "Halbleiterschaltungstechnik", 8. Auflage, Seiten 253 bis 259 und 651 bis 654, sowie durch die DE-PS 20 05 836 bekannt.

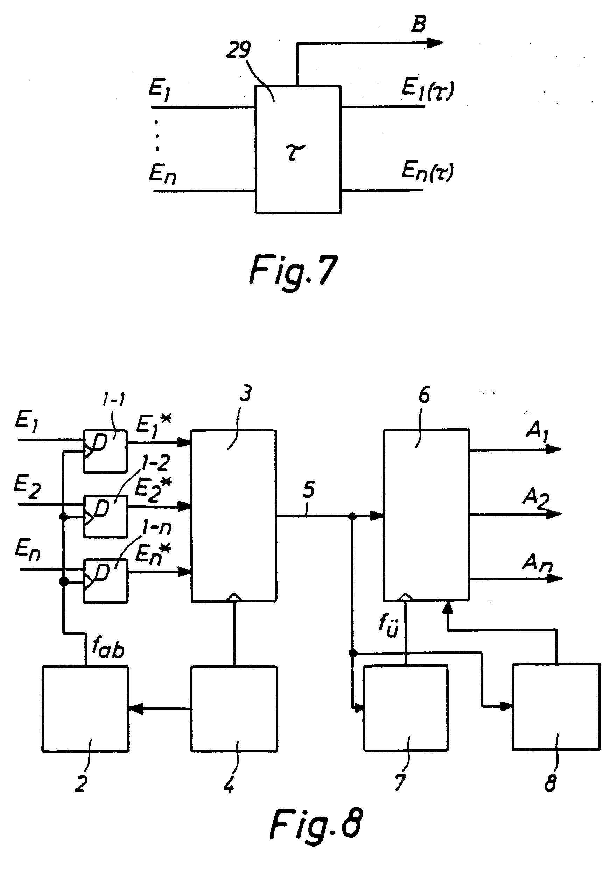

Fig. 8 zeigt eine herkömmliche Schaltungsanordnung für die Übertragung von n-Bitbreiten asynchronen Datenwörtern auf einer binären - zum Beispiel optischen - Übertragungsstrecke. Die jeweiligen, parallelen Eingangssignale $E_1$, $E_2$, ..., $E_n$ werden jeweils einer Synchronisationsstufe 1-1, 1-2, ... 1-n zugeleitet, die beispielsweise D-Flip-Flops sein können, und die von einer Taktschaltung 2 Taktsignale $f_{ab}$ zugeleitet erhalten. Die Ausgänge der Synchronisationsstufen 1-1, 1-2, ...1-n sind mit einem Parallel-Seriell-Wandler 3 verbunden, der das Taktsignal für den Übertragungstakt $f_\ddot{u}$ von der Taktstufe 4 bereitgestellt erhält, die weiterhin mit der Taktschaltung 2 für die Abtastung der Datenkanäle verbunden ist. Der Parallel-Seriell-Wandler 3 ist über eine Übertragungsstrecke 5 mit einem Seriell-Parallel-Wandler 6 mit parallelen Ausgängen $A_1$, $A_2$...An verbunden. Mit der Übertragungsstrecke 5 ist weiterhin eine Schaltungsanordnung 7 für die Übertragungstakt-Erkennung und eine Schaltungsanordnung 8 für die Synchronisations-Erkennung verbunden, wobei erstere 7 das erkannte Taktsignal $f_\ddot{u}$ und letztere 8 das Synchronisationssignal dem Seriell-Parallel-Wandler 6 bereit stellt.

Die Eingangsdaten $E_1$, $E_2$,... $E_n$ werden mit dem zeitlichen Abstand $T_{ab}$ gleich $1/f_{ab}$ abgetastet und mit Start- und Stopprahmen, etwa jeweils einem Start- und Stoppbit, zu einem sogenannten Übertragungsrahmen zusammengestellt und über die Übertragungsstrecke 5 seriell übertragen. Auf der Ausgangsseite der Übertragungsstrecke 5 wird der Seriell-Parallel-Wandler 6 mit dem Start- bzw. Stopprahmen synchronisiert. Die Laufzeit der Daten auf der Übertragungsstrecke ist $T_{Lauf}$.

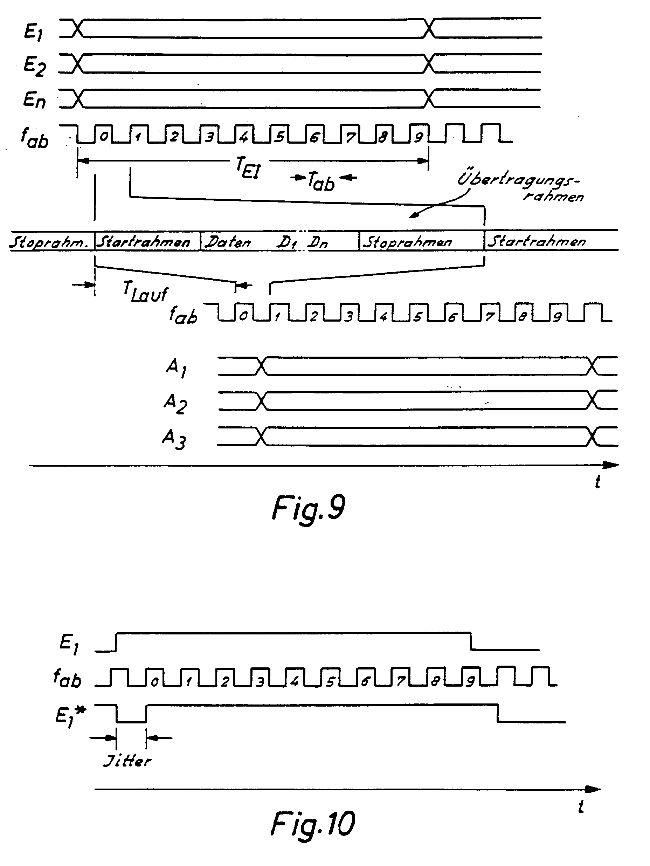

In Fig. 9 sind die Signaldiagramme dargestellt, wobei $T_{Ei}$ die Zeit zwischen auftretenden Änderungen an den Eingangskanälen ist.

Dieses bekannte Übertragungsverfahren weist den Nachteil auf, daß systembedingt ein sogenannter Jitter ($\delta$) entsteht, der gleich dem Verhältnis zwischen der Maximaltaktrate $F_{Ei(max)}$ und der Taktrate für die Abtastung der Datenkanäle ist, so daß gilt

$$\delta = \frac{f_{Ei(max)}}{f_{ab}} \approx \frac{1}{f_{ab} \cdot T_{Ei(max)}} \qquad (1)$$

Aus Fig. 10 ist unmittelbar zu entnehmen, warum der Jitter auftritt. Er ist nämlich der zeitliche Versatz zwischen der Pegeländerung des Eingangssignals, zum Beispiel des Signals $E_1$, gegenüber der ersten, danach auftretenden ansteigenden Flanke des Abtast-Taktsignals $f_{ab}$, oder anders ausgedrückt, der zeitliche Versatz zwischen der Pegeländerung des Eingangssignals $E_1$ und des Ausgangssignals $E_1$* der Synchronisierungsstufe 1-1 (vgl. Fig. 8).

Wie aus Gleichung (1) unmittelbar ersichtlich ist, muß die Abtastrate möglichst groß gewählt werden, um den Jitter klein zu halten.

Die Übertragungsdatenrate $f_\ddot{u}$ ist von erlaubtem Jitter abhängig, weil gilt

$$f_\ddot{u} = f_{ab} (n + n_{Start} + n_{Stop}) \qquad (2)$$

Unter Berücksichtigung der Gleichung (1) ergibt sich also

$$f_\ddot{u} = \frac{f_{Ei(max)}}{\delta} \cdot (n + n_{Start} + n_{Stop}) \qquad (3)$$

Hierbei bedeuten n die Anzahl der Datenbits, $n_{Start}$ die Anzuahl der Startrahmenbits und $n_{Stop}$ die Anzahl der Stoprahmenbits.

Mit einem erlaubten Jitter von 5 % ergibt sich also

$$f_{\ddot{u}} \geq 20 \cdot f_{EI(max)} \, (n + n_{Start} + n_{Stop}) \qquad (4)$$

Ersichtlich ist die Übertragungsrate viel zu groß bzw. ein systembedingter Jitter muß in Kauf genommen werden, so daß dieses bekannte Übertragungsverfahren ungeeignet ist.

Aus der DE-PS 20 05 836 ist ein Übertragungsverfahren der eingangs genannten Art bekannt, das das zuvor beschriebene Verfahren verbessert, jedoch nach wie vor einen systembedingten Jitter aufweist. Gemäß dem aus der DE-PS 20 05 836 bekannten Verfahren gilt für den Jitter bzw. für die Übertragungstaktrate

$$\delta = \frac{1}{2^{(K-1)} \cdot k} \qquad (5)$$

$$f_{\ddot{u}} = f_{EI(max)} \cdot k \qquad (6)$$

Hierbei ist K die Anzahl der Bits pro Übertragungsrahmen. Das bekannte Verfahren fügt "Kanaldatenbits" dem Übertragungsrahmen hinzu, die angeben, welche logischen Pegel die einzelnen Eingangskanäle haben. Die Formel (5) ändert sich daher in

$$\delta = \frac{1}{2^{(K-4)} \cdot K} \qquad (7)$$

wobei wiederum die Formel (6) gilt. Dadurch kann zwar das Produkt aus Jitter und Übertragungstaktrate bei konstanter maximaler Datenrate des Eingangskanals günstiger gestaltet werden, ein systembedingter Jitter tritt jedoch nach wie vor auf. Das bekannte Verfahren weist darüber hinaus den weiteren Nachteil auf, daß dann, wenn sich die Eingangsdaten nicht ändern, auch die Ausgangsdaten konstant bleiben. Dadurch ist eine kontinuierliche Datenrate mit diesem bekannten Verfahren nicht möglich.

Der Erfindung liegt daher die Aufgabe zugrunde, ein Übertragungsverfahren der eingangs genannten Art anzugeben und eine Schaltungsanordnung zu schaffen, bei dem, bzw. bei der kein systembedingter Jitter auftritt.

Die gestellte Aufgabe wird erfindungsgemäß dadurch gelöst, daß Änderungen der zu übertragenden Daten ermittelt, und die Daten bei Feststellen einer Änderung übertragen werden.

Durch die erfindungsgemäße Maßnahme ist es also nicht mehr erforderlich, die zu übertragenden Daten, also die Eingangsdaten, periodisch abzutasten. Es besteht also keine Zeitrasterabhängigkeit mehr, so daß auch ein systembedingter Jitter und die damit verbundenen Nachteile nicht auftritt bzw. auftreten. Vielmehr wird der Übertragungsrahmen unmittelbar nach bzw. aufgrund einer Änderung der zu übertragenden Daten, also der Eingangsdaten, gesendet.

Ein weiterer Vorteil des erfindungsgemäßen Verfahrens besteht insbesondere auch darin, daß die gesamte Zeit für die Übertragung der Daten benutzt werden kann, weil sich eine erneute Datenänderung frühestens nach $T_{EI(min)}$ ergibt, wenn die zu übertragenden Daten als Datenpakete mit Übertragungsrahmen übertragen werden. In diesem Falle ist $T_{Rahmen} \leq T_{Ei(min)}$. Durch das Übertragungsverfahren bedingte Bitdauerverzerrungen treten nicht auf. Darüber hinaus ist das Verhältnis zwischen der maximalen Datenrate der binären Übertragungsstrecke $f_{\ddot{u}(max)}$ und der maximalen Datenrate der Eingangskanäle $f_{EI(max)}$ klein, was angestrebt wird.

Gemäß einer besonders vorteilhaften Ausführungsform der Erfindung wird der Zeitraum zwischen zwei Datenänderungen ermittelt, und die zuvor übertragenen Daten werden wenigstens ein weiteres Mal übertragen, wenn der ermittelte Zeitraum größer oder gleich dem für die Übertragung der Daten erforderlichen Zeitraum ist. Wenn es also der Zeitraum zwischen zwei Änderungen der zu übertragenden Daten an den Eingängen erlaubt, wird die Aussendung der zu übertragenden Daten wiederholt. Dadurch ist eine kontinuierliche Datenübertragung und eine kontinuierliche Datenrate auf der Übertragungsstrecke gewährleistet. Ein weiterer Vorteil der wiederholten Datenübertragung besteht auch darin, daß nach einer Störung der Übertragung bzw. der Übertragungsstrecke sich der korrekte Zustand an den Ausgängen des Seriell-Parallel-Wandlers nach einer gewissen Zeit wieder einstellt. Durch die Wiederholung der Datenübertragung ist es darüber hinaus möglich, einen Ausfall der Übertragungsstrecke durch die dann fehlenden Zustandsänderungen auf dem Übertragungsmedium bzw. der Übertragungsstrecke zu erkennen.

Das erfindungsgemäße Verfahren ist insbesondere für die asynchrone Übertragung von Datensignalen mit Vorteil einsetzbar. Die binär codierten Daten werden dabei vorteilhafterweise als Datenpakete in Übertragungsblöcken zu übertragen, wobei die Ausführungsform der Erfindung noch vorteilhafter ist, wenn die Datenpakete als Übertragungsrahmen mit Start- und Stoprahmen versehen sind.

Die gestellte Aufgabe wird erfindungsgemäß auch mit einer Schaltungsanordnung der eingangs genannten Art gelöst, die wenigstens einen Änderungen der zu übertragenden Daten ermittelten Änderungsdetektor aufweist, dessen Ausgangssignal dem Parallel-Seriell-Wandler zugeleitet wird und die Datenübertragung auslöst. Die auf diese Weise ausgebildete Schaltungsanordnung bzw. der für die Übertragung verwendete Multiplexer weist dadurch einen sehr einfachen Schaltungsaufbau auf, so daß die Schaltungsanordnung sehr kostengünstig herstellbar ist und insbesondere auch nur Standardbauteile für die Schaltung erforderlich sind.

Zwischen dem Änderungsdetektor und dem Parallel-Seriell-Wandler ist vorzugsweise eine Ansteuerschaltung vorgesehen. Die Ansteuerschaltung taktet den Parallel-Seriell-Wandler in Abhängigkeit vom Ausgangssignal des Änderungsdetektors.

Besonders vorteilhaft ist eine Ausführungsform der Erfindung, gemäß der der Änderungsdetektor einen Zeitraumdetektor zur Ermittlung des Zeitraums zwischen zwei Datenänderungen aufweist.

Weitere Ausführungsformen der Erfindung sind in den Unteransprüchen angegeben.

Die Erfindung wird nachstehend an Hand von Ausführungsbeispielen unter Bezugnahme auf die Zeichnungen erläutert. Es zeigen:

Fig. 1 ein Blockschaltbild einer erfindungsgemäßen Schaltungsanordnung in schematischer Darstellung,

Fig. 2 ein Impulsdiagramm zur Erläuterung der in Fig. 1 dargestellten Schaltungsanordnung,

Fig. 3 eine Ausführungsform der in Fig. 1 dargestellten Ansteuerungschaltung in schematischer Darstellung,

Fig. 4 ein Impulsdiagramm zur Erläuterung der in Fig. 3 dargestellten Ausführungsform einer Steuerschaltung,

Fig. 5 eine Ausführungsform des in Fig. 1 dargestellten Änderungsdetektors in schematischer Darstellung,

Fig. 6 ein weitere Ausführungsform des in Fig. 1 dargestellten Änderungsdetektors in schematischer Darstellung,

Fig. 7 eine Ausführungsform eines Zeitraum-Detektors zur Ermittlung des Zeitraums zwischen zwei Datenänderungen,

Fig. 8 eine bekannte Schaltungsanordnung zur seriellen Übertragung asynchroner Datenwörter auf einer Übertragungsstrecke,

Fig. 9 ein Impulsdiagramm zur Erläuterung der in Fig. 8 dargestellten bekannten Schaltungsanordnung, und

Fig.10 ein weiteres Impulsdiagramm zur Erläuterung des bei bekannten Schaltungsanordnungen auftretenden Jittereffekts.

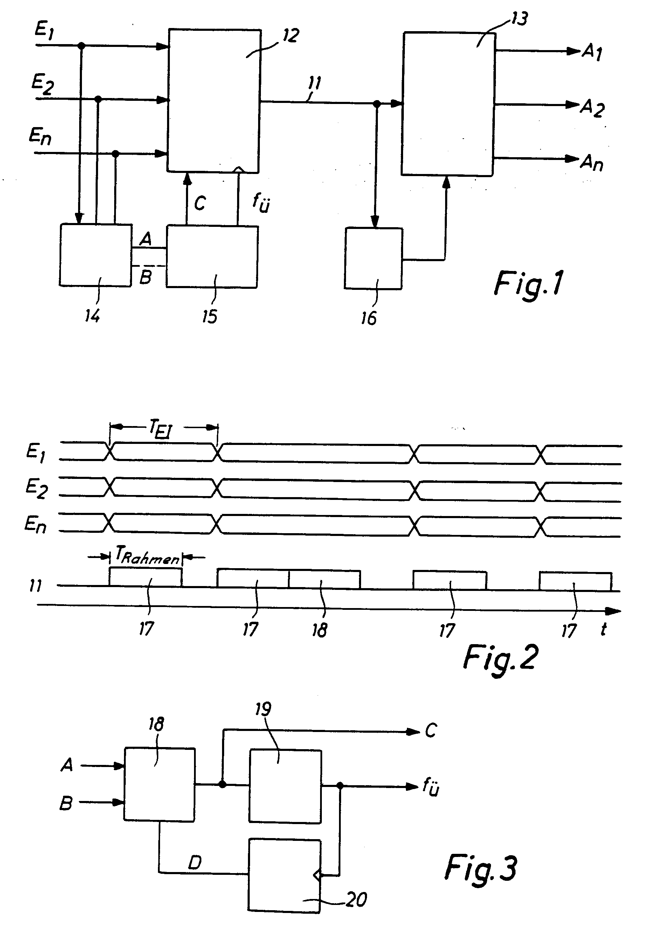

Bei der in Fig. 1 schematisch dargestellten Schaltungsanordnung einer erfindungsgemäßen Ausführungsform weist eine Datenübertragungsstrecke 11 an ihrem Eingang einen Parallel-Seriell-Wandler 12 und an ihrem Ausgang einen Seriell-Parallel-Wandler 13 auf. Dem Parallel-Seriell-Wandler 12 werden zu übertragende Datensignale $E_1$, $E_2$ ..., $E_n$ parallel hinzugeführt, die jeweils auch einem Änderungsdetektor 14 bereitgestellt werden. Ausgangssignale des Änderungsdetektors 14 werden über Leitungen A und/oder B einer Ansteuerschaltung 15 zugeleitet, die dem Parallel-Seriell-Wandler 12 ein Ansteuersignal C und das Übertragungstaktsignal $f_ü$ bereitst0ellt. Eine Synchronisationsschaltung 16 erhält als Eingangssignal das auf der Datenübertragungsstrecke 11 anliegende Signal zugeleitet und gibt an den Seriell-Parallel-Wandler 13 ihr Ausgangssignal zu dessen Synchronisation ab.

An Hand von Fig. 2 wird die Funktionsweise der in Fig. 1 dargestellten Schaltungsanordnung erläutert. Die bei den Eingangssignalen auftretenden binären Datensignale $E_1$, $E_2$ ... $E_n$ sind mit ihren Binäränderungen in ihrem zeitlichen Verlauf dargestellt. Der zeitliche Abstand zwischen zwei Binäränderungen an den Eingangskanälen beträgt $T_{EI}$ und darf eine Mindestzeitdauer $T_{EI(min)}$ nicht unterscheiden.

Im Änderungsdetektor 14 wird nun festgestellt, wenn eine Pegeländerung bei den zu übertragenden Daten der Eingangsleitungen auftritt. Bei Feststellung einer derartigen Pegeländerung gibt der Änderungsdetektor 14 über die Ausgangsleitung A ein Signal an die Ansteuerschaltung 15 ab, die in Abhängigkeit davon über die Leitung C einen (nicht dargestellten) Oszillator bzw. Taktgenerator des Parallel-Seriell-Wandlers 12 startet, so daß die zu übertragenen Daten $E_1$, $E_2$ ... $E_n$ in den Parallel-Seriell-Wandler eingegeben werden. Die Übertragung des Datenpakets über die Datenübertragungsstrecke 11 wird also unmittelbar nach Feststellung einer Änderung der zu übertragenden Daten gestartet.

Die Datenpakete weisen einen an Hand von Fig. 9 zuvor bereits beschriebenen Übertragungsrahmen mit einem Startrahmen, den zu übertragenen Daten $T_1$, $T_2$ ... $T_n$ sowie einem Stoprahmen auf. Die Datenpakete haben daher eine bestimmte, vorgegebene zeitliche Länge, nämlich $T_{Rahmen}$, wobei sich die Übertragungsrate $f_ü$ aus

$$f_ü = f_{EI(max)} \cdot (n + n_{Start} + n_{Stopp}) \qquad (8)$$

ergibt.

In Fig. 2 ist das zeitliche Auftreten der Datenpakete 17 auf der Übertragungsstrecke 11 dargestellt. Auf Grund der Start- und Stoprahmen erkennt die Synchronisationsschaltung 16 auf der Empfängerseite den Beginn und das Ende eines Datenpakets 17 und synchronisiert den (nicht dargestellten) empfängerseitigen Taktgenerator zur Taktung des Seriell-Parallel-Wandlers 13, an dessen Ausgängen $A_1$, $A_2$, ... $A_n$ die übertragenen Daten wiederum parallel bereitgestellt werden.

Fig. 3 zeigt eine Ausführungsform der Ansteuerschaltung 15. Eine Logikschaltung 18 erhält die an den Ausgängen A und B des Änderungsdetektors 14 auftretenden Signale zugeleitet. Ein Ausgang der Logikschaltung 18 ist mit der Leitung C (vgl. Fig. 1) und einem Oszillator 19 verbunden, der dem Parallel-Seriell-Wandler 12 das Übertragungstaktsignal $f_ü$ bereitstellt. Der Ausgang des Oszillators 19 ist mit dem Eingang eines Zählers 20 verbunden, dessen Ausgangsignal über eine Leitung D zur Logikschaltung 18 geführt wird.

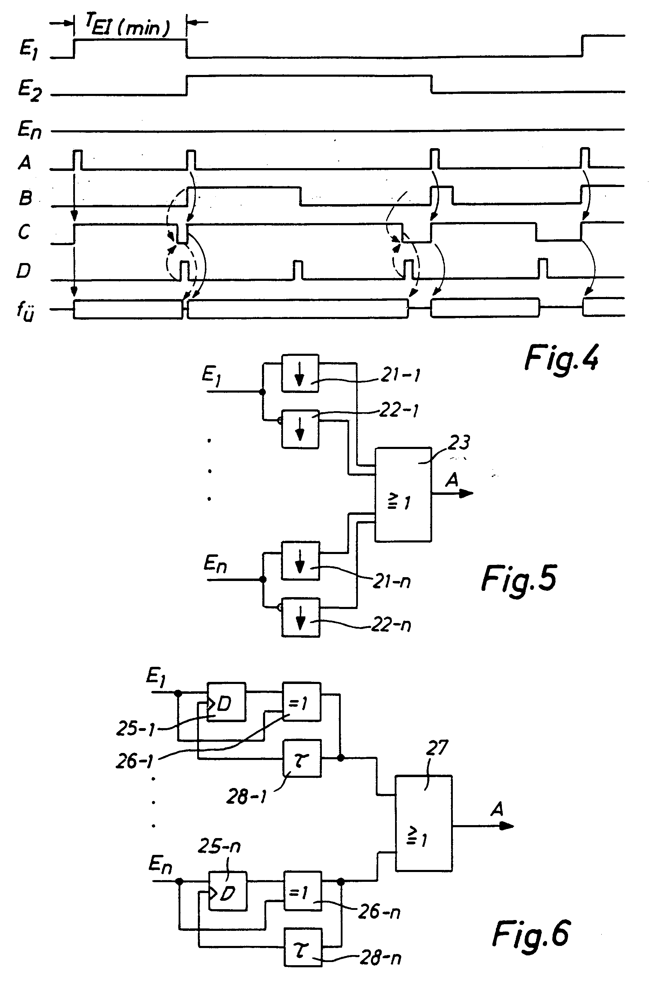

Fig. 4 zeigt ein Impulsdiagramm zur Erläuterung der in Fig. 10 dargestellten Ausführungsform einer Ansteuerschaltung 15, wobei die zeitlichen Signalverläufe der zu übertragenden Datensignale $E_1$, $E_2$ ... $E_n$ sowie die an den Leitungen A, B, C, D (vgl. Fig. 1 und 3) auftretenden Signalverläufe dargestellt sind. Darunter ist schließlich das Datenübertragungstaktsignal $f_ü$ schematisch in seinem Auftreten dargestellt.

Wie bereits an Hand von Fig. 1 und 2 erläutert, stellt der Änderungsdetektor 14 eine Pegeländerung der zu übertragenden Datensignale fest und gibt dementsprechend das Ausgangssingal A an die Logikschaltung 18 ab. Gemäß einer weiteren vorteilhaften Ausführungsform der Erfindung gibt der Änderungsdetektor 14 bei dem dargestellten Ausführungsbeispiel weiterhin über die Leitung B an die Logikschaltung 18 der Ansteuerschaltung 15 ein Signal ab, welches jeweils den kleinstmöglichen zeitlichen Abstand $T_{EI(min)}$ von Änderungen der Eingangssignale wiedergibt. Das Impulssignal auf der Leitung C ist das Signal, welches auftritt, so lange der Parallel-Seriell-Wandler 12 senden soll. Die Impulsdauern des Signals auf der Leitung C entsprechen den Zeiten, während denen das Übertragungstaktsignal $f_ü$ abgegeben wird.

Immer dann, wenn an der Leitung A ein Impuls auftritt, wird der Oszillator 19 gestartet (vgl. die Signale A und $f_ü$ in Fig. 4). Dagegen wird der Oszillator 19 gestopt, wenn an der Leitung C eine abfallende Flanke auftritt, d. h., wenn ein Datenpaket zu Ende ist und nicht mehr ausreichend Zeit für die Übertragung eines vollständigen Datenpakets bis zum Auftreten der nächsten Pegeländerung der zu übertragenden Daten vorhanden ist. Ist dagegen der Zeitraum bis zum Auftreten der nächsten Pegeländerung der Eingangsdaten größer oder gleich dem Übertragungszeitraum von zwei oder n Datenpaketen, so bleibt der Oszillator 19 weiterhin eingeschaltet, so daß die Übersendung des Datenpakets mindestens einmal wiederholt wird.

Am Ende der Übertragung eines Datenpakets wird also festgestellt, ob der Zeitraum bis zum Auftreten der nächsen Pegeländerung der Eingangssignale für eine Wiederholung der Übersendung eines vollständigen Datenpakets ausreicht (vgl in Fig. 4 den Signalverlauf auf der Leitung D). Ist dieser Zeitraum groß genug, so wird der Oszillator 19 nicht abgeschaltet, d. h. die Übersendung des Datenpakets wird wiederholt. Dieser Vorgang ist in Fig. 2 durch das Datenpaket 18 auf der Übertragungsleitung 11 schematisch dargestellt und geht auch aus dem in Fig. 4 dargestellten Taktsignalverlauf $f_ü$ (zweiter Taktsignalblock) hervor, der doppelt so lang wie der Taktsignalverlauf $f_ü$ für ein Datenpaket ist.

Reicht der Zeitraum zwischen dem Ende der Aussendung eines Datenpakets und dem Auftreten der nächsten Pegeländerung der zu übertragenden Daten für eine wiederholte Aussendung des vollständigen Datenpakets nicht aus, wird der Oszillator 19 gestopt und der zuvor beschriebene Vorgang wiederholt sich von Neuem.

In Fig. 4 ist durch ausgezogene Pfeile das Starten des Oszillators 19 und durch gestrichelte Pfeile das Stoppen des Oszillators 19 schematisch dargestellt.

Auf Grund dieses in Fig. 3 dargestellten Ausführungsbeispiels für eine Ansteuerungschaltung 15 zur Wiederholung der Datenübertragung bei ausreichendem zeitlichen Abstand ergibt sich eine kontinuierliche, konstante Datenrate auf der Übertragungsstrecke. Darüber hinaus ist mit dieser Ausführungsform insbesondere auch garantiert, daß sich der korrekte Übertragungszustand an den Ausgängen $A_1$, $A_2$, Der Änderungsdetektor 14 gemäß Fig. 1 hat die Aufgabe, zu ermitteln, wann sich der Pegelzustand von einem oder mehreren Einangssignale $E_1$, $E_2$,...$E_n$ ändert. Eine vorteilhafte Ausführungsform für eine diese Aufgabe erfüllende Schaltungsanordnung ist in Fig. 5 schematisch dargestellt. Jedes Eingangssignal $E_1$, $E_2$, ... $E_n$ wird jeweils einem Monoflip 21-1, 21-2, ... 21-n und einem invertierenden Monoflop 22-1, 22-2, ...22n zugeleitet, deren Ausgangssignale einer Vergleicherschaltung 23 zugeführt werden, die ihr Ausgangssignal an die Leitung A abgibt. Bei einer Zustandsänderung an den Eingängen $E_1$, $E_2$, ...,$E_n$ wird durch die dabei auftretende Flanke entsprechend deren Richtung das jeweilige Monoflop 21-1, 21-2, ..., 21-n getriggert. Die dabei an den Ausgängen der Monoflops 21-1, 21-2, ..., 21-n entstehenden Pulse werden über die Vergleicherschaltung 23 der Leitung A zugeführt. Die Zeitkonstanten der Monoflops 21-1, 21-2, ..., 21-n; 22-1, 22-2, ..., 22-n bestimmen die Breite des Pulses auf der Leitung A.

Eine alternative Ausführungsform der in Fig. 5 dargestellten Schaltungsanordnung zur Ermittlung der Pegeländerungen der Eingangssignale ist in Fig. 6 dargestellt. Die Eingangssignale $E_1$, $E_2$, ...$E_n$ werden jeweils einem D-Flip-Flop 25-1, 25-2, ... 25-n sowie einem Vergleicher 26-1, 26-2 ,...26-n zugeleitet. Das Ausgangssignal des Vergleichers 26-1, 26-2, ...26-n wird einerseits einer Vergleicherschaltung 27 und andererseits über jeweils ein Laufzeitglied 28-1, 28-2,...28-n dem Takteingang des jeweiligen D-Flip-Flops 25-1, 25-2, ... 25-n rückgeführt. Mit den Laufzeitgliedern 28-1, 28-2, ... 28n wird die Impulsbreite eingestellt. Bei einer Änderung des bzw. der Eingangssignale $E_1$, $E_2$, ..., $E_n$ liegt am Ausgang des jeweiligen Vergleichers 26-1, 26-2, ..., 26-n ein Änderungspuls vor, da sich im jeweiligen D-Flip-Flop 25-1, weiligen D-Flip-Flops 25-1, 25-2, ... 25-n rückgeführt. Mit den Laufzeitgliedern 28-1, 28-2, ... 28n wird die Impulsbreite eingestellt. Bei einer Änderung des bzw. der Eingangssignale $E_1$, $E_2$, ..., $E_n$ liegt am Ausgang des jeweiligen Vergleichers 26-1, 26-2, ..., 26-n ein Änderungspuls vor, da sich im jeweiligen D-Flip-Flop 25-1, 25-2, ...., 25-n noch der alte Zustand befindet, und zwar so lange, bis durch das jeweilige Laufzeitglied 28-1, 28-2, ..., 28-n verzögert das jeweilige Flip-Flop 25-1, 25-2, ..., 25-n getriggert wird und der jeweilige D-Flip-Flop 25-1, 25-2, ...25-n dem am jeweiligen Eingang $E_1$, $E_2$, ..., $E_n$ auftretenden Zustand abgespeichert hat. Diese Änderungspulse werden über die Vergleicherschaltung 27 dem Ausgang A zugeführt.

Wie zuvor bereits erläutert wurde, hat der Änderungsdetektor 14 gemäß einer vorteilhaften Ausführungsform der Erfindung weiterhin die Aufgabe, festzustellen, ob die Pegel der Eingangssignale $E_1$, $E_2$, ... $E_n$ über einen Zeitraum andauern oder nicht, der größer oder gleich dem Datenpaket bzw. dem zeitlichen Übertragungsrahmen $T_{Rahmen}$ ist oder nicht, um entscheiden zu können, ob das gerade übertragene Datenpaket nochmals in seiner vollen Länge wiederholt übertragen werden kann oder nicht. Die in Fig. 7 dargestellte Schaltungsstufe des Änderungsdetektors 14 zeigt eine bevorzugte Ausführungsform zur Durchführung dieser zusätzlichen Aufgabe. Die Datensignale $E_1$, $E_2$, ... $E_n$ werden dabei einer Verzögerungsschaltung 29 zugeführt, deren Verzögerungszeit größer oder gleich dem Übertragungszeitraum eines Datenpakets bzw. eines Übertragungsrahmens ist. Am Ausgang B des Verzögerungsglieds 29 (der dem Ausgang B des Änderungsdetektors 14 in Fig. 1 entspricht) tritt immer dann ein Signal auf, wenn im Laufzeitglied 29, also innerhalb des vorgegebenen Verzögerungszeitraums, eine Pegeländerung der Eingangssignale $E_1$, $E_2$, ... $E_n$ auftritt. Über die Leitung B kann daher in diesem Falle der Oszillator 19 der Ansteuerschaltung 15 gestopt werden.

Unter Verwendung der in Fig. 7 dargestellten Schaltungsanordnung werden statt der Signale $E_1$, $E_2$, ... $E_n$ die Signale $E_1$ $(\tau)$, $E_2$ $(\tau)$, ... $E_n$ $(\tau)$ dem Parallel-Seriell-Wandler 12 bereitgestellt. Die diesen Signalen entsprechenden Datenpakete bzw. Übertragungsrahmen werden dann wiederholt übertragen, so lange an der Leitung B kein Signal auftritt.

Die in Fig. 7 dargestellte Schaltungsanordnung bzw. das Laufzeitglied 29 macht sich bei der erfindungsgemäßen Schaltungsanordnung funktionsmäßig dadurch bemerkbar, daß die Signale bei der Übertragung durch das System eine zusätzliche Laufzeit aufweisen.

Wie bereits zuvor erläutert wurde, dürfen sich Änderungen der zu übertragenden Daten frühestens nach einem Zeitraum einstellen, der einem Mindestzeitraum $T_{EI(min)}$ entspricht, und der den Zeitraum zur Übertragung eines vollständigen Datenpaketes darstellt. Kann dies nicht garantiert werden, beispielsweise deshalb, weil Störsignale, etwa Spikes, auftreten, so ist es vorteilhaft, eine Schaltungsanordnung zur Unterdrückung von Störsignalen, etwa Spikes, zu verwenden. Wie bereits ausgeführt wurde, muß der zeitliche Abstand zwischen Änderungen der zu übertragenden Daten $T_{EI(min)}$ größer oder gleich dem Übertragungsrahmen sein, da sonst zwischen zwei Datenänderungen die Zeit nicht ausreicht, um den gesamten Übertragungsrahmen zu übertragen.

**Patentansprüche**

1. Verfahren zum seriellen Übertragen von binär codierten Daten über eine Übertragungsstrecke, wobei die Daten am Eingang der Übertragungsstrecke einem Multiplex-Vorgang mit einer Parallel-Seriell-Wandlung und am Ausgang der Übertragungsstrecke einen Demultiplex-Vorgang mit einer Seriell-Parallel-Wandlung unterzogen werden,
dadurch **gekennzeichnet,** daß Änderungen der zu übertragenden Daten ermittelt und die Daten bei Feststellen einer Änderung übertragen werden.

2. Verfahren nach Anspruch 1, dadurch gekennzeichnet, daß der Zeitraum zwischen zwei Datenänderungen ermittelt, und die zuvor übertragenen Daten werden wenigstens ein weiteres Mal übertragen werden, wenn der ermittelte Zeitraum größer oder gleich dem für die Übertragung der Daten erforderlichen Zeitraum ist.

3. Verfahren nach Anspruch 1 oder 2, dadurch gekennzeichnet, daß die Übertragung asynchron erfolgt.

4. Verfahren nach einem der vorhergehenden Ansprüche, dadurch gekennzeichnet, daß die Daten als Datenpakete übertragen werden.

5. Verfahren nach Anspruch 4, dadurch gekennzeichnet, daß die Datenpakete als Übertragungsrahmen mit Start- und Stop-Rahmen versehen sind.

6. Schaltungsanordnung zum seriellen Übertragen von binär codierten Daten über eine Übertragungsstrecke (11), die am Eingang einen Multiplexer mit einem Parallel-Seriell-Wandler (12) und am Ausgang einen Demultiplexer mit einem Seriell-Parallel-Wandler (13) aufweist, **gekennzeichnet** durch wenigstens einen Änderungen der zu übertragenden Daten ermittelnden Änderungsdetektor (14), dessen Ausgangssignal dem Parallel-Seriell-Wandler (12) zugeleitet wird und die Datenübertragung auslöst.

7. Schaltungsanordnung nach Anspruch 6, dadurch gekennzeichnet, daß zwischen dem Änderungsdetektor (14) und dem Parallel-Seriell-Wander (12) eine Ansteuerschaltung (15) vorgesehen ist.

8. Schaltungsanordnung nach Anspruch 6 oder 7, dadurch gekennzeichnet, daß der Änderungsdetektor (14) einen Zeitraumdetektor (29) zur Ermittlung des Zeitraums zwischen zwei Datenänderungen aufweist (Fig. 7).

9. Schaltungsanordnung nach Anspruch 8, dadurch gekennzeichnet, daß der Zeitraumdetektor ein Ausgangssignal an dem Parallel-Seriell-Wandler (12) zur wiederholten Übertragung der Daten abgibt, wenn der ermittelte Zeitraum größer oder gleich dem für die Übertragung der Daten erforderlichen Zeitraum ist.

10. Schaltungsanordnung.nach einem der Ansprüche 6 bis 9, gekennzeichnet durch eine Störsignalunterdrückungsschaltung.

11. Schaltungsanordnung nach einem der Ansprüche 6 bis 10, gekennzeichnet durch eine Asynchronübertragung.

12. Schaltungsanordung nach einem der Ansprüche 6 bis 11, dadurch gekennzeichnet, daß die Daten in Datenpakete (17, 18) aufgeteilt sind.

13. Schaltungsanordnung nach Anspruch 12, dadurch gekennzeichnet, daß die Datenpakete (17, 18) als Übertragungsrahmen mit Start- und/oder Stoprahmen versehen sind.

E₁ → 12

E₂ →

Eₙ →

11

13 → A₁

→ A₂

→ Aₙ

C   f_ü

A

B̄

14   15   16

**Fig.1**

$T_{EI}$

E₁

E₂

Eₙ

$T_{Rahmen}$

11

17   17   18   17   17   t

**Fig.2**

18   19 → C

A →

B →

→ f_ü

D

20

**Fig.3**

Fig.4

Fig.5

Fig.6

9

**Fig.7**

**Fig.8**

Fig.9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | WO-A-8 103 729 (WESTERN ELECTRIC COMPANY INC.)<br>* Zusammenfassung *<br>* Abbildungen 1,2,9,10,12,13 *<br>* Seite 3, Zeile 8 - Seite 4, Zeile 35 *<br>* Seite 9, Zeile 28 - Seite 12, Zeile 27 *<br>* Seite 21, Zeile 25 - Seite 22, Zeile 6 *<br>* Ansprüche 1-3,7,8 *<br>--- | 1,3,5-7, 11 | H04L5/22 |
| A | PTT BEDRIJF<br>Bd. 18, Nr. 1, April 1972, DEN HAAG NL<br>Seiten 80 - 88<br>J. A. BIJLSTRA: 'Time Division Multiplexing of asynchronous data signals by coding of transitions.'<br>* Seite 80, rechte Spalte, Zeile 35 - Seite 81, linke Spalte, Zeile 7 *<br>* Seite 82, linke Spalte, Zeile 1 - Zeile 27 *<br>* Seite 85, rechte Spalte, Absatz 5.1 *<br>* Seite 86; Abbildung 9 *<br>--- | 1-8, 11-13 | |
| A | NTZ NACHRICHTENTECHNISCHE ZEITSCHRIFT<br>Nr. 6, 1966, BERLIN DE<br>Seiten 322 - 330<br>A. KAMMERL: 'Eine vollelektronische Fernschreib- und Datenwählvermittlung.'<br>* Seite 323, linke Spalte, Zeile 35 - Zeile 40 *<br>* Seite 323, rechte Spalte, Zeile 23 - Zeile 37 *<br>* Seite 324; Abbildung 5 *<br><br>----- | 1,6 | **RECHERCHIERTE SACHGEBIETE (Int. Cl.5 )**<br><br>H04L |

Der vorliegende Recherchenbericht wurde für alle Patentansprüche erstellt

| Recherchenort | Abschlußdatum der Recherche | Prüfer |
|---|---|---|
| DEN HAAG | 24 SEPTEMBER 1993 | GRIES T.M. |